**Europäisches Patentamt**

**European Patent Office**

**Office européen des brevets**

(19)

(11) Veröffentlichungsnummer : **0 432 754 B1**

(12) ## EUROPÄISCHE PATENTSCHRIFT

(45) Veröffentlichungstag der Patentschrift :
**31.08.94 Patentblatt 94/35**

(51) Int. Cl.⁵ : **H02J 1/10**, G05F 1/59

(21) Anmeldenummer : **90123946.7**

(22) Anmeldetag : **12.12.90**

(54) **Schaltungsanordnung einer Stromversorgungseinheit.**

(30) Priorität : **12.12.89 DE 3941052**

(43) Veröffentlichungstag der Anmeldung :
**19.06.91 Patentblatt 91/25**

(45) Bekanntmachung des Hinweises auf die
Patenterteilung :
**31.08.94 Patentblatt 94/35**

(84) Benannte Vertragsstaaten :
**AT BE CH DE ES FR GB IT LI NL SE**

(56) Entgegenhaltungen :
**WO-A-87/00655**
**CH-A- 659 156**
**DE-A- 3 319 653**
**DE-C- 3 932 437**

(73) Patentinhaber : **Siemens Nixdorf**
**Informationssysteme Aktiengesellschaft**
**Fürstenallee 7**
**D-33102 Paderborn (DE)**

(72) Erfinder : **Adam, Jürgen, Dipl.-Ing. (FH)**
**Lechstrasse 1**
**W-8872 Burgau (DE)**
Erfinder : **Busch, Peter, Dipl.-Ing. (FH)**
**Flugfeldstrasse 16**
**W-8900 Augsburg (DE)**
Erfinder : **Sterzig, Willi, Dipl.-Ing. (FH)**
**Karlsbader Strasse 28**
**W-8900 Augsburg (DE)**

(74) Vertreter : **Fuchs, Franz-Josef, Dr.-Ing. et al**
**Postfach 22 13 17**
**D-80503 München (DE)**

## Beschreibung

Die Erfindung betrifft eine Schaltungsanordnung einer Stromversorgungseinheit gemäß den Merkmalen des Oberbegriffs des Anspruchs 1.

Vielfach werden elektrotechnische Geräte nicht in ihrer maximalen Ausbaustufe gebaut, um das Gerät durch entsprechende Erweiterungen an steigende Anforderungen anpassen zu können. Betroffen davon sind meist auch die Stromversorgungseinrichtungen, die einem gesteigerten Leistungsbedarf Rechnung tragen müssen. Um deren Anpassungsfähigkeit zu gewährleisten, können die Stromversorgungseinrichtungen aus Grundmodulen von Stromversorgungseinheiten bestehen, die jeweils parallelgeschaltet ein Stromversorgungspaket mit einer gewünschten Gesamtausgangsleistung bilden.

Ein Problem dabei ist, daß durch ungenügende gegenseitige Anpassung der einzelnen Grundmodule eines Stromversorgungspakets meist wenigstens ein Grundmodul so ausgesteuert wird, daß es seine maximale Ausgangsleistung liefert und damit höchstmöglich belastet ist, während andere zur benötigten Gesamtausgangsleistung nur einen Restanteil liefern und damit geringer belastet sind. Eine ungenügende gegenseitige Anpassung zeigt sich beispielsweise in geringen Unterschieden zwischen den Ausgangsspannungen der einzelnen Grundmodule oder in deren unterschiedlichen Ausgangsmassepotentialen, kann aber auch durch ungleiche Anschlußleitungen, insbesondere der Ausgangsmassepotentiale, bedingt sein. Eine ungleiche Belastungsaufteilung auf die einzelnen Grundmodule hat aber zur Folge, daß die bei Gleichverteilung der Belastung ansonsten erzielbare mittlere störungsfreie Zeit (MTBF - Mean Time Between Failures) herabgesetzt ist.

Der genaue Abgleich der einzelnen Grundmodule ist mit einem großen Arbeitsaufwand verbunden. Außerdem ist bei einmaligem Abgleich nicht sichergestellt, daß das Ergebnis des Abgleichs über die Zeit erhalten bleibt, so daß gegebenenfalls neuerliche Abgleicharbeiten notwendig sind. Aber selbst bei korrektem Abgleich hängt das Abgleichsergebnis nach wie vor von äußeren Temperatureinflüssen ab.

Abhilfe können aufwendige zusätzliche Steuereinheiten oder zu Mastereinheiten umfunktionierte Grundmodule schaffen, die die gleichmäßige Belastungsaufteilung regeln. Bei Ausfall einer solchen steuernden Einheit ist aber ohne weitere Maßnahmen in der Regel gleich das ganze Stromversorgungspaket ausgefallen.

Eine bekannte Stromversorgungseinheit gemäß dem Oberbegriff des Anspruchs 1 ist beispielsweise in der Druckschrift der Firma Unitrode: Power Supply Design Seminar 1986, Seiten C1-4 und C1-5, Absatz "Current Mode Control" beschrieben. Diese bekannte Stromversorgungseinheit weist eine Regeleinrichtung für die Ausgangsspannung und eine zu dieser Regeleinrichtung unterlagert arbeitende Regeleinrichtung für den Ausgangsstrom auf. Nachteil dieser Stromversorgungseinheit ist, daß sie in dieser Form nicht parallelschaltungsfähig ist. Es ist nicht möglich, durch Parallelschalten solcher Stromversorgungseinheiten eine Stromversorgungseinrichtung zu bilden, die die Leistungsanpassung an gesteigerte Leistungsansprüche durch Hinzufügen weiterer Stromversorgungseinheiten erlaubt. Dabei wäre es auch wünschenswert, wenn jeweils eine gleichmäßige Belastungsaufteilung auf die vorhandenen Stromversorgungseinheiten erfolgen würde.

Aus der Patentschrift CH-A-659 156 ist eine Anordnung zur Parallelschaltung von Stromversorgungseinheiten mit jeweils einer Regeleinrichtung für die Ausgangsspannung und jeweils einer Regeleinrichtung für den Ausgangsstrom bekannt. Die Regeleinrichtung für den Ausgangsstrom ist derart konzipiert, daß sie nur aktiv wird, wenn mehrere solcher Anordnungen parallel geschaltet sind. Die Regeleinrichtung für den Ausgangsstrom ist der Regeleinrichtung für die Ausgangsspannung nicht unterlagert. Die Regeleinrichtung für den Ausgangsstrom weist ein Widerstandsnetzwerk auf, das in einem Bereich des Ausgangs des Widerstandsnetzwerks einen Anschlußpunkt für eine, jeweils gleiche Anschlußpunkte gleichartiger parallelgeschalteter Stromversorgungseinheiten miteinander verbindende Steuerleitung aufweist. Über diese Steuerleitung ist es möglich, parallelgeschaltete Stromversorgungseinheiten stets mit einer gleichverteilten Last zu betreiben. Dies ist möglich, weil die Widerstandsnetzwerke parallelgeschalteter Stromversorgungseinheiten eine Spannungsadditionsschaltung bilden, die einen Mittelwert erzeugt, der innerhalb des Regelkreises für den Ausgangsstrom einer jeden parallelgeschalteten Stromversorgungseinheit als Regelgröße verwendet wird.

Nachteilig bei der vorgestellten Anordnung ist, daß es sich hierbei nicht um Stromversorgungseinheiten mit einem Regelkreis zum Regeln der Ausgangsspannungen, zu dem ein Regelkreis zum Regeln des Ausgangsstroms unterlagert arbeitet, handelt. Derartige Stromversorgungseinheiten sollten aber auch mit dem Effekt einer Gleichverteilung einer Last parallelgeschaltet werden können.

Aufgabe der Erfindung ist es deshalb, eine Schaltungsanordnung einer Stromversorgungseinheit der eingangs genannten Art anzugeben, die mit einfachen Mitteln zu jedem Zeitpunkt eine gleichmäßige Aufteilung der Belastung eines aus parallelgeschalteten Grundmodulen zusammengesetzten Stromversorgungspakets auf die einzelnen Grundmodule gewährleistet.

Diese Aufgabe wird durch die Merkmale des kennzeichnenden Teils des Anspruchs 1 gelöst. Danach hän-

2

gen die einzelnen Grundmodule bezüglich ihrer tatsächlich jeweils abgegebenen Ausgangsleistung voneinander ab, so daß ein Hochlaufen eines Grundmoduls in Richtung seiner Leistungsgrenze ein im gleichen Maße solches Hochlaufen in Richtung jeweilige Leistungsgrenze bei allen anderen Grundmodulen bewirkt. Die gleichmäßige Belastungsaufteilung bleibt so stets erhalten. Der Hochlauf wird dann automatisch gestoppt, wenn die Gesamtausgangsleistung des Stromversorgungspakets dem erforderlichen Leistungsbedarf des betreffenden Geräts entspricht. Zeitliche und temperaturbedingte Einflußgrößen wirken sich auf die gleichmäßige Belastungsaufteilung nicht mehr aus. Abgleichsarbeiten entfallen, da die gleichmäßige Belastungsaufteilung durch die Art der Zusammenschaltung stets und automatisch mit der Zusammenschaltung erzwungen wird. Weist das Stromversorgungspaket Leistungsreserven gegenüber dem Leistungsbedarf des Gerätes auf, werden diese bei Ausfall eines Grundmoduls unter Beibehaltung der gleichmäßigen Belastungsaufteilung automatisch dazu verwendet, die Leistung des ausgefallenen Grundmoduls zu ersetzen. Das Stromversorgungspaket fällt damit nicht zwangsläufig mit einem Grundmodul aus. Werden Grundmodule vewendet, deren Pegel, auf die durch die Art der Zusammenschaltung Einfluß genommen wird, bei 100% Last jeweils gleich groß sind, können auch solche Grundmodule zusammengeschaltet werden, die unterschiedliche Ausgangsleistungen aufweisen. Die gleichmäßige Belastungsaufteilung erfolgt in diesem Fall dann bezogen auf die jeweilige maximale Grundmodulausgangsleistung. Die verwendeten Mittel sind einfach, weil nur jeweils gleich große Widerstandsbauteile und im einfachsten Fall eine Steuerleitung benötigt werden.

Vorteilhafte Ausgestaltungen der Erfindung sind Gegenstand von Unteransprüchen. Dabei ist die Ausbildung der Mittelwertbildner mit zwei Widerstandsbauteilen und der Anschlußmöglichkeit für eine Referenzspannungsquelle besonders vorteilhaft, weil dadurch der Einfluß ungleicher Ausgangsmassepotentiale und ungleicher Anschlußleitungen beseitigt werden.

Nachfolgend werden anhand der Zeichnung zwei Ausführungsbeispiele der Erfindung näher erläutert. Es zeigen:

FIG 1     ein Blockschaltbild einer einzelnen Stromversorgungseinheit,

FIG 2     ein erstes Ausführungsbeispiel für den erfindungswesentlichen Teil der Stromversorgungseinheit nach FIG 1,

FIG 3     ein zweites Ausführungsbeispiel für den erfindungswesentlichen Teil der Stromversorgungseinheit nach FIG 1 und

FIG 4     eine Parallelschaltung von Stromversorgungseinheiten gemäß FIG 1.

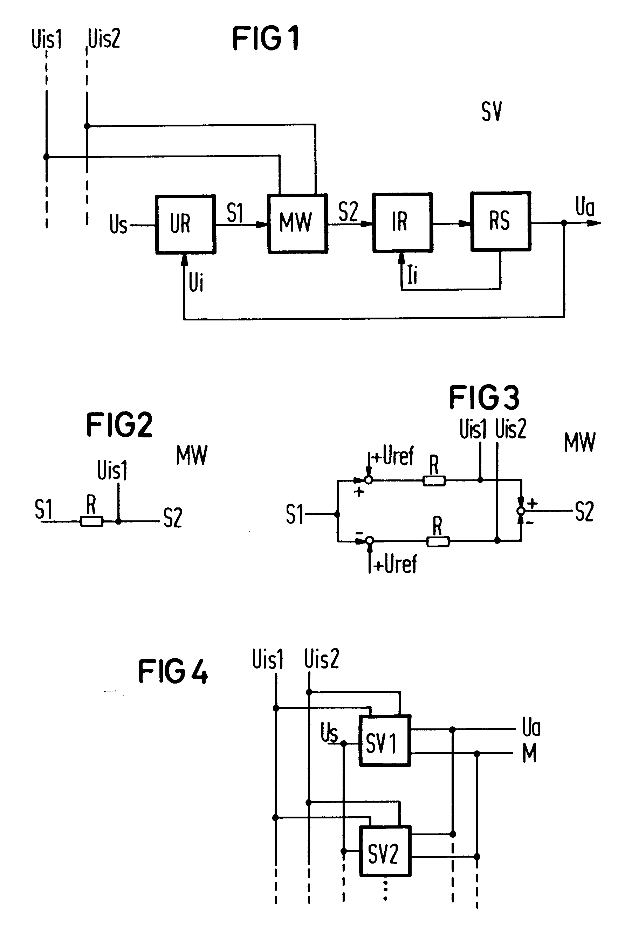

In FIG 1 sind vier Blöcke zu sehen, von denen, von links nach rechts, der erste einen Spannungsregler UR, der zweite einen Mittelwertbildner MW, der dritte einen Stromregler IR und der vierte eine Regelstrecke RS jeweils in allgemeiner Form darstellen. Die Blöcke sind hintereinandergeschaltet und weisen über den Spannungsregler UR einen Gesamteingang für eine Sollspannung Us und über den Stromregler IR einen Gesamtausgang für eine tatsächliche Ausgangsspannung Ua auf. Die Regelstrecke RS ist über eine Rückkopplungsstrecke mit dem Stromregler IR verbunden. Auf der Rückkopplungsstrecke wird ein Signal Ii rückgeführt, das ein Maß für den Ausgangsiststrom darstellt. Über eine zweite Rückkopplungsstrecke wird ferner vom Gesamtausgang der Anordnung zum Spannungsregler UR die Ausgangsspannung Ua auf den Spannungsregler UR zurückgeführt. Dem Spannungsregler UR ist noch der Mittelwertbildner MW nachgeschaltet, der an zwei Steuerleitungen angeschlossen ist, auf denen Signale geführt sind, die mit Uis1 und Uis2 bezeichnet sind.

Ohne dem Mittelwertbildner MW und den zugehörigen Steuerleitungen stellt die Blockanordnung eine aus dem Stand der Technik an sich bekannte Stromversorgungseinheit dar, die einen Spannungsregelkreis aufweist, zu dem ein Stromregelkreis unterlagert arbeitet. Der Spannungsregler UR liefert dabei ein Ausgangssignal S1, das ein Maß für den vom Stromregler IR einzustellenden Sollstrom darstellt. Beim Stand der Technik wird das Signal S1 direkt dem Stromregler IR als Signal S2 zugeführt. Der Stromregler IR vergleicht dieses Signal mit dem, ein Maß für den Ausgangsiststrom darstellende Signal Ii und führt eine entsprechende Nachregelung durch. Parallel dazu vergleicht der Spannungregler UR die tatsächliche Ausgangsspannung Ua mit der Sollspannung Us und erzeugt ein verbessertes Ausgangssignal S1. Dieser Vorgang wiederholt sich solange, bis sich bei dem Grundmodul eine gewünschte Ausgangsleistung eingestellt hat.

Der zwischen dem Spannungsregler UR und dem Stromregler IR angeordnete Mittelwertbildner MW verhindert im Zusammenwirken mit den Mittelwertbildnern MW der anderen zu einem Stromversorgungspaket parallel zusammengeschalteter Stromversorgungseinheiten ein Hochlaufen des betreffenden Moduls an dessen Leistungsgrenze. Die Tatsache, daß in FIG 1 der Mittelwertbildner MW an zwei Steuerleitungen angeschlossen ist, hängt mit einem Ausführungsbeispiel zusammen, das in FIG 3 näher erläutert ist. Der Mittelwertbildner MW könnte auch nur an eine Steuerleitung angeschlossen sein, was mit einem Ausführungsbeispiel zusammenhängt, das in FIG 2 näher erläutert ist. In jedem Fall verbindet eine Steuerleitung jeweils gleiche Anschlußpunkte der Mittelwertbildner MW parallel geschalteter Stromversorgungseinheiten.

Die Signale auf den Steuerleitungen sind bidirektional. Parallelgeschaltete Stromversorgungseinheiten beeinflussen sich deshalb über die jeweils zugehörigen Mittelwertbildner gegenseitig. Über die Mittelwertbild-

EP 0 432 754 B1

ner werden jeweils die Pegel der Stromversorgungseinheiten beeinflußt, die ein Maß für die jeweils zugehörige Ausgangsleistung der jeweiligen Stromversorgungseinheit darstellen. Die Einflußnahme ist dabei so, daß die ursprünglichen Pegel gemittelt werden und der sich ergebende gemittelte Pegel den einzelnen Stromversorgungseinheiten anstelle der jeweils ursprünglichen Pegel zugeführt wird. Auf diese Weise geben die einzelnen Stromversorgungseinheiten stets die gleiche Ausgangsleistung ab.

Bei den Mittelwertbildnern MW handelt es sich um Widerstandsschaltnetze, für die es mehrere Ausführungsmöglichkeiten gibt. Parallelgeschaltete Stromversorgungseinheiten weisen jeweils nur entweder die eine oder andere Ausführungsform auf.

Durch die Mittelwertbildner MW ist es notwendig, die einzelnen eingangs bereits erwähnten Signale als Spannungsgrößen aufzufassen, wobei es sich bei der Bildung des Mittelwertpegels für die Stromversorgungseinheiten um eine Strommittelwertbildung handelt, die durch einen Spannungspegel ausgedrückt wird.

FIG 2 zeigt als Mittelwertbildner ein Widerstandsschaltnetz, das aus einem Widerstandsbauteil R besteht, an dessen eine Anschlußseite das Signal S1 hingeführt ist. Die andere Anschlußseite des Widerstandsbauteils R weist einen Anschlußpunkt für eine Steuerleitung auf, auf der das Signal Uis1 geführt ist. An derselben Anschlußseite kann darüberhinaus das Signal S2 abgegriffen werden. Da es sich, wie oben erwähnt, bei den Signalen um Spannungsgrössen handelt, sind die Signale Uis1 und S2 identisch. Bei parallelgeschalteten Stromversorgungseinheiten verursachen die einzelnen Ausgangssignale S1 der jeweiligen Spannungsregler UR über die Widerstandsbauteile R der jeweiligen Widerstandsschaltnetze der Mittelwertbildner einen Stromfluß, der durch die, die Mittelwertbildner verbindende Steuerleitung gemittelt und als Spannungssignal Uis1 den Stromreglern der einzelnen Stromversorgungseinheiten zugeführt wird.

Der Zusammenhang zwischen der Strommittelwertbildung und dem, die Strommittelwertbildung ausdrückenden Spannungssignal Uis1, kann in folgender Formel ausgedrückt werden:

$$Uis1 = \frac{\sum\limits_{x=1}^{n} S1x}{n} = k \cdot Ism$$

Dabei bezeichnen:

Uis1 - den Strommittelwert, den jede einzelne Stromversorgungseinheit im Parallelbetrieb liefern soll und durch den Spannungspegel $k \cdot Ism$ repräsentiert wird,

S1x - den Spannungspegel des Spannungsreglers der x-ten Stromversorgungseinheit parallelgeschalteter Stromversorgungseinheiten,

n - die Anzahl parallelgeschalteter Stromversorgungseinheiten,

k - einen Proportionalitätsfaktor und

Ism - den mittleren Sollstrom, den die einzelnen Stromversorgungseinheiten im Parallelbetrieb liefern sollen.

In FIG 3 ist als Mittelwertbildner ein Widerstandsschaltnetz gezeigt, das im wesentlichen aus der Parallelschaltung zweier Widerstandsschaltnetze gemäß FIG 2 gebildet ist. Es sind somit zwei Steuerleitungen vorhanden, von denen die eine das Signal Uis1 und die andere das Signal Uis2 führt. Für beide Signale gilt Analoges, was im Zusammenhang mit der FIG 2 für das Signal Uis1 gesagt wurde. Abweichungen ergeben sich lediglich daraus, daß das Signal S1 für jedes Widerstandsbauteil R dieses Widerstandsschaltnetzes zunächst über eine eigene Verknüpfungsschaltung geführt ist. Die eine Verknüpfungsschaltung addiert dabei das Signal S1 zu einer Referenzspannung Uref, während die andere Verknüpfungsschaltung das Signal S1 von der Referenzspannung Uref subtrahiert. Bei parallelgeschalteten Stromversorgungseinheiten werden auf diese Weise auf der jeweils anderen Seite der betreffenden Widerstandsbauteile R zwei Strommittelwerte erzeugt und als Signale Uis1 und Uis2 dargestellt, die spiegelbildlich auf eine Meßmasse bezogen sind. Die Referenzspannung Uref wird wieder beseitigt, indem die jeweils anderen Seiten der Widerstandsbauteile R eines Widerstandsschaltnetzes auf jeweils eine weitere Verknüpfungsschaltung geführt sind, die das, die Differenz zwischen der Referenzspannung Uref und dem Signal S1 enthaltene Signal Uis2 von dem, die Summe dieser Signale enthaltene Signal Uis1 subtrahiert. Als Ergebnis erhält man pro Stromversorgungseinheit parallelgeschalteter Stromversorgungseinheiten ein gleiches Signal S2, das jeweils von dem Ausgangsmassepotential der jeweiligen Stromversorgungseinheit unabhängig ist.

In FIG 4 ist die Parallelschaltung mehrerer Stromversorgungseinheiten SV1, SV2 gemäß FIG 1 dargestellt. Es sind jeweils gleiche Anschlußpunkte miteinander verbunden. Für die einzelnen Stromversorgungseinheiten sind Mittelwertbildner gemäß der FIG 3 verwendet. Dadurch wirken sich u.a. die ungleichen Anschlußleitungen, insbesondere für die jeweiligen Masseanschlüsse M, wie in FIG 4 zu erkennen, nicht aus.

4

**Patentansprüche**

1. Schaltungsanordnung einer Stromversorgungseinheit mit einer Regeleinrichtung für die Ausgangsspannung und einer zu dieser Regeleinrichtung unterlagert arbeitenden Regeleinrichtung für den Ausgangsstrom,
dadurch gekennzeichnet, daß zwischen der Regeleinrichtung für die Ausgangsspannung (UR) und der Regeleinrichtung für den Ausgangsstrom (IR) ein Mittelwertbildner (MW) mit einem Eingang für ein von der Regeleinrichtung für die Ausgangsspannung (UR) abgegebenes Signal (S1) und einem Ausgang für ein der Regeleinrichtung für den Ausgangsstrom (IR) zugeführtes Signal (S2) angeordnet ist, der wenigstens einen Anschlußpunkt für eine jeweils zugehörige bidirektionale Steuerleitung (Uis1, Uis2) aufweist und der mit jeweils einem entsprechenden Anschlußpunkt vom Mittelwertbildner (MW) mindestens einer weiteren Stromversorgungseinheit (SV2, ...) verbindbar ist.

2. Schaltungsanordnung nach Anspruch 1,
dadurch gekennzeichnet, daß der Mittelwertbildner (MW) aus einem Widerstandsbauteil (R) besteht, dessen Ausgang gleichzeitig auch Anschlußpunkt für die zugehörige bidirektionale Steuerleitung (Uis1, Uis2) ist.

3. Schaltungsanordnung nach Anspruch 1,
dadurch gekennzeichnet, daß der Mittelwertbildner (MW) aus zwei gleichen Widerstandsbauteilen (R) besteht, deren Eingänge mit Ausgängen jeweils einer Verknüpfungsschaltung verbunden sind, von denen die eine Verknüpfungsschaltung zwei positive und die andere einen positiven und einen negativen Eingang aufweist, die so angeschlossen sind, daß einer der beiden positiven Eingänge der einen und der positive Eingang der anderen Verknüpfungsschaltung jeweils mit einer gleichen Referenzspannung (Uref) und die beiden verbleibenden Eingänge der beiden Verknüpfungsschaltungen mit dem Ausgang der Regeleinrichtung für die Ausgangsspannung (UR) verbunden sind, und deren Ausgänge mit je einem Anschlußpunkt für die jeweils zugehörige bidirektionale Steuerleitung (Uis1, Uis2) und mit je einem Eingang einer, einen positiven und einen negativen Eingang aufweisenden, ausgangsseitig mit dem Eingang der Regeleinrichtung für den Ausgangsstrom (IR) zusammengeschalteten weiteren Verknüpfungsschaltung derart verbunden sind, daß der Ausgang desjenigen Widerstandbauteils (R) mit dem negativen Eingang der weiteren Verknüpfungsschaltung verbunden ist, dessen Eingang mit der, einen positiven und einen negativen Eingang aufweisenden anderen Verknüpfungssschaltung verbunden ist.

4. Schaltungsanordnung nach einem der Ansprüche 1 bis 3,
dadurch gekennzeichnet, daß bei Parallelschaltung von mindestens zwei Stromversorgungseinheiten diese gleichartig aufgebaut sind, und bezüglich jeweils ihrer Eingänge, Ausgänge und Anschlußpunkte ihres jeweiligen Mittelwertbildners (MW) für die jeweils zugehörige bidirektionale Steuerleitung (Uis1, Uis2) parallel miteinander verbunden sind.

**Claims**

1. Circuit arrangement of a power supply unit having a regulating device for the output voltage and having a regulating device, which operates on a hierarchically lower level than this regulating device, for the output current, characterized in that an averaging device (MW) having an input for a signal (S1) emitted by the regulating device for the output voltage (UR) and having an output for a signal (S2) supplied to the regulating device for the output current (IR) is arranged between the regulating device for the output voltage (UR) and the regulating device for the output current (IR), which averaging device (MW) has at least one connection point for a respectively associated bidirectional control line (Uis1, Uis2) and can be connected to in each case one corresponding connection point from the averaging device (MW) of at least one further power supply unit (SV2, ...).

2. Circuit arrangement according to Claim 1, characterized in that the averaging device (MW) comprises a resistor component (R) whose output is at the same time also the connection point for the associated bidirectional control line (Uis1, Uis2).

3. Circuit arrangement according to Claim 1, characterized in that the averaging device (MW) comprises two identical resistor components (R) whose inputs are connected to outputs of in each case one logic circuit, one of which logic circuits has two positive inputs and the other has one positive and one negative input, which inputs are connected such that one of the two positive inputs of one logic circuit and the positive input of the other logic circuit are in each case connected to an identical reference voltage (Uref), and the two remaining inputs of the two logic circuits are connected to the output of the regulating device for the output voltage (UR) and their outputs are connected to in each case one connection point for the respectively associated bidirectional control line (Uis1, Uis2) and to in each case one input of a further logic circuit which has a positive input and a negative input and is connected on the output side to the input of the regulating device for the output current (IR), such that the output of that resistor component (R) is connected to the negative input of the further logic circuit, whose input is connected to the other logic circuit having a positive input and a negative input.

4. Circuit arrangement according to one of Claims 1 to 3, characterized in that, in the event of at least two power supply units being connected in parallel, these units are of identical construction and are connected in parallel with one another with respect in each case to their inputs, outputs and connection points of their respective averaging device (MW) for the respectively associated bidirectional control line (Uis1, Uis2).

## Revendications

1. Montage d'une unité d'alimentation en courant, comportant une installation de régulation de la tension de sortie et une installation de régulation du courant de sortie, asservie à cette installation de régulation, caractérisé en ce qu'un dispositif (MW) formant une valeur moyenne et comportant une entrée pour un signal (S1) fourni par l'installation de régulation de la tension (UR) de sortie et une sortie pour un signal (S2) envoyé à l'installation de régulation du courant (IR) de sortie est monté entre l'installation de régulation de la tension (UR) de sortie et l'installation de régulation du courant (IR) de sortie, ce dispositif (MW) formant une valeur moyenne comportant au moins un point de raccordement pour une ligne (Uis1, Uis2) de commande bidirectionnelle respectivement associée et pouvant être relié avec respectivement un point de raccordement correspondant du dispositif (MW) formant une valeur moyenne d'au moins une autre unité (SV2,...) d'alimentation en courant.

2. Montage suivant la revendication 1,
caractérisé en ce que le dispositif (MW) formant une valeur moyenne est constitué d'un composant (R) résistif, dont la sortie est aussi en même temps un point de raccordement pour la ligne (Uis1, Uis2) de commande bidirectionnelle associée.

3. Montage suivant la revendication 1,
caractérisé en que le dispositif (MW) formant une valeur moyenne est constitué de deux composants (R) résistifs identiques, dont les entrées sont reliées à des sorties respectivement de circuits combinatoires, dont l'un a deux entrées positives et dont l'autre a une entrée positive et une entrée négative, qui sont connectées, de sorte que l'une des deux entrées positives de l'un des circuits combinatoires et l'entrée positive de l'autre circuit combinatoire sont chacune reliées à une même tension (Uref) de référence et les deux autres entrées restantes des deux circuits combinatoires sont reliées à la sortie de l'installation de régulation de la tension (UR) de sortie, les sorties des composants résistifs sont chacune reliées à un point de raccordement pour une ligne (Uis1, Uis2) de commande bidirectionnelle associée et à une entrée d'un autre circuit combinatoire, qui a une entrée positive et une entrée négative et est branché côté sortie à l'entrée de l'installation de régulation du courant (IR) de sortie, de sorte que la sortie de celui des composants (R) résistifs dont l'entrée est reliée à l'autre circuit combinatoire ayant une entrée positive et une entrée négative, est relié à l'entrée négative de l'autre circuit combinatoire.

4. Montage suivant l'une des revendications 1 à 3,
caractérisé en ce que lorsque l'on branche en parallèle au moins deux unités d'alimentation en courant, celles-ci ont une structure du même genre, et sont reliées du point de vue de respectivement leurs entrées, sorties et points de raccordement de chacun de leur dispositif (MW) formant une valeur moyenne, en parallèle l'une à l'autre par rapport à la ligne (Uis1, Uis2) de commande bidirectionnelle associée.

# FIG 1

# FIG2

# FIG 3

# FIG 4